Europäisches Patentamt

(19) European Patent Office

Office européen des brevets

(11) Publication number: 0 184 432
A2

(12) EUROPEAN PATENT APPLICATION

(21) Application number: 85308804.5

(22) Date of filing: 03.12.85

(51) Int. Cl.⁴: G 02 B 6/32
G 02 B 6/26

(30) Priority: 04.12.84 US 678116

(43) Date of publication of application:
11.06.86 Bulletin 86/24

(84) Designated Contracting States:
DE FR GB

(71) Applicant: AMERICAN TELEPHONE AND TELEGRAPH
COMPANY
550 Madison Avenue
New York, NY 10022(US)

(72) Inventor: Ocenasek, Josef
350 Baldwin Road
Parsippany New Jersey 07984(US)

(72) Inventor: Sandahl, Carl Ragnar
17 Shady Lane
Morristown New Jersey 07960(US)

(74) Representative: Johnston, Kenneth Graham et al,
Western Electric Company Limited 5 Mornington Road
Woodford Green Essex, IG8 OTU(GB)

(54) Optical coupler.

(57) A coupler for coupling light between optical fibers (11, 16) having substantially different numerical apertures and core diameters is disclosed. The coupler comprises a pair of abutting graded-index-of-refraction lenses (14, 15) with each lens having a numerical aperture which is different from the other. This arrangement can be advantageously utilized for coupling light between multimode and monomode optical fibers.

FIG. 1

EP 0 184 432 A2

OPTICAL COUPLER

Technical Field

The present invention relates to an optical coupler and, more particularly, to an optical coupler for conducting light between multimode and monomode optical fibers.

Background of the Invention

There are presently two types of optical fibers used in telecommunications system applications. Multimode fibers transmit multiple optical modes along the optical fiber core and have a relatively large numerical aperture. Monomode or single mode optical fibers, on the other hand, only transmit a single optical mode and have a substantially smaller numerical aperture than multimode fibers. While the optical loss per unit length is typically lower for monomode fibers than for multimode fibers, the smaller numerical aperture of monomode fibers makes the connection from multimode to monomode fibers difficult and inefficient.

Monomode fibers are being introduced into the loop plant because they provide the capacity for future growth of wideband telecommunications services by changing only the terminal equipment. At the same time, light-emitting diodes (LEDs) remain attractive for outside plant applications because of their reliability, low cost, and tolerance of environmental effects. LED sources, however, are typically coupled into multimode fibers because of their inherent wide angle emission. The problem of coupling light from a multimode pigtail into a monomode fiber has not as yet been addressed.

emanating from source 10 is launched into the core of
fiber 11 and is successively coupled into GRIN-rod lens
14,15 and thence the core section 17 of monomode optical
fiber 16. Monomode fiber 16 also comprises a cladding
layer 18 which surrounds core section 17. While the
outside diameters of fibers 11 and 16 are approximately
the same, the core diameter and numerical aperture of
monomode fiber 16 are always much smaller than the core
diameter and numerical aperture of multimode fiber 11.
The core of either fiber may be of the type that
exhibits either a graded or constant index of refraction
measured along the radius thereof.

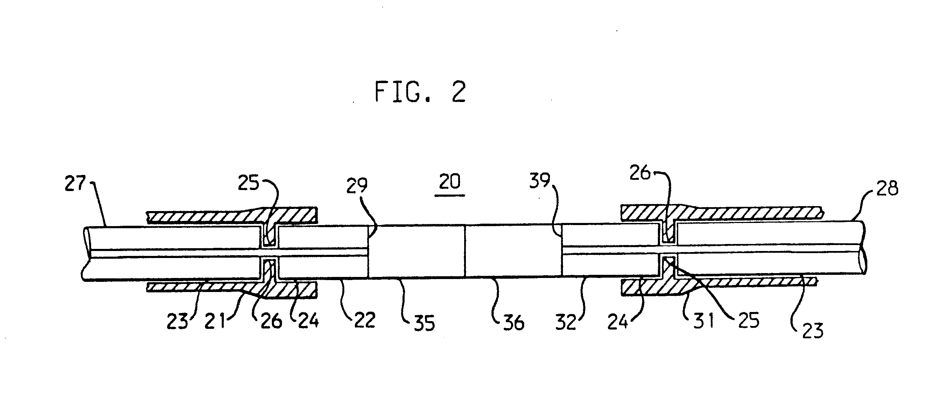

Lens 14 and 15 each have a 1/4 pitch and,
being butted together, their overall length is 1/2 the
wavelength of the periodic length of the sinusoidal path
followed by a propagating beam in transit through the
lens segments. This 1/2 wavelength path is represented
in FIG. 1 by dashed ray lines 19 and 20. In this ray
depiction, an input optical spot directed at end face 21
of lens 14 is imaged on the righthand end face 22 of
lens 15. To couple a substantial portion of the optical
energy from multimode fiber 11 into monomode fiber 16,
the numerical apertures of lens 14 and 15 are unequal.
Preferably, assuming ideal lenses, the numerical
aperture of lens 14 should be greater than that of
multimode fiber 11 while the numerical aperture of lens
15 should be less than that of monomode fiber 16.

Refer now to FIG. 2 which shows a coupler 20,
in accordance with the present invention, adapted for
use with optical fiber cables. This adaptation is
provided through the use of pairs of identical
ferrules 21, 31 and capillary tubes 22 and 32. Each
optical fiber cable comprises either a monomode or
multimode optical fiber having a light transmitting core
surrounded by a cladding region, which, in turn, is
surrounded by one or more protective layers. In the
illustrative coupler, the numerical apertures of the monomode and multimode fibers are approximately .1 and .3, respectively.

Ferrules 21, 31 each comprise two cylindrical sections 23 and 24 which are connected via aperture 25 in wall 26. Section 23 is sized to slidingly receive an optical fiber cable while section 24 is designed to slidingly receive either capillary tube 22 or 32. The diameter of aperture 25 and the diameters of the apertures in capillary tubes 22 and 32 are slightly larger than the overall diameter of the monomode or multimode optical fiber.

To assemble the coupler, capillary tubes 22, 32 are respectively inserted into sections 24 of ferrules 21 and 31. The protective layers surrounding the cladding region of multimode optical fiber cable 27 are removed for a sufficient length such that when cable 27 is fully inserted into section 23 of ferrule 21 until the protective layers of cable 27 abut wall 26, the exposed fiber of cable 27 extends through aperture 25 and thence completely through the aperture in capillary tube 22. The extending exposed end of cable 27 is then cut and polished until flush with the end 29 of capillary tube 22. In similar fashion, the protective layers surrounding the cladding region of monomode optical fiber cable 28 are removed for a sufficient length such that when cable 28 is fully inserted into section 23 of ferrule 21 until the protective layers surrounding the cladding abut wall 26, the exposed core and cladding of cable 28 extend through aperture 25 in ferrule 31 and the aperture in capillary tube 32. The extending exposed end of cable 28 is then cut and polished until flush with end 39 of capillary tube 32.

Once the cables are assembled into the ferrules and capillary tubes, a pair of butted GRIN-rod lens 35, 36 having unequal numerical apertures are placed between end faces 29 and 39 of capillary tubes 22 and 32.  Preferably, the numerical aperture of lens 35 is selected to be greater than the numerical aperture of the multimode optical fiber within cable 27 and the numerical aperture of lens 36 is selected to be less than the numerical aperture of the monomode optical fiber within cable 28.  After insertion of lens 35 and 36 between ends 29 and 39, an index-matching adhesive can be applied to the contacting end faces between the lenses and capillary tubes to maintain integrity of the coupler.  The above-described coupler has been used to couple light between monomode and multimode optical fibers with less optical loss than that obtained by aligning and abutting the end faces of the monomode and multimode optical fibers together.

It is to be understood that the above-described arrangements are only illustrative of the applications and principles of the present invention. In accordance with these principles, other related arrangements may be devised by those skilled in the art without departing from the spirit and scope of the invention.

0184432

CLAIMS

1. An optical coupler characterised by a first optical fiber having a first numerical aperture, a second optical fiber having a substantially different second numerical aperture, and first and second abutting graded-index-of-refraction lenses disposed between said first and second optical fibers so as to couple light therebetween and said lenses having numerical apertures which are substantially different from one another.

2. The coupler of claim 1, characterised in that said lenses have a combined longitudinal length equal to a one-half wavelength of the period of the sinusoidal path followed by an optical signal propagating through said lenses.

3. The coupler of claim 1, characterised in that said first and second optical fibers are respectively multimode and monomode optical fibers.

4. The coupler of claim 3, characterised in that said first lens is adjacent to said first fiber and has a third numerical aperture which is greater than said first numerical aperture.

5. The coupler of claim 4, characterised in that said second lens is adjacent to said second fiber and has a fourth numerical aperture which is less than said second numerical aperture.

6. The coupler of claim 1, characterised in that said first and second lenses are substantially in contact with said first and second fibers, respectively.

KGJ/KW.

FIG. 2